# EUROPÄISCHE PATENTANMELDUNG

(11) **EP 0 758 676 A2**
(43) Veröffentlichungstag der Anmeldung: **19.02.1997**
(21) Anmeldenummer: 96112212.4
(22) Anmeldetag: 29.07.1996
(51) Int. Cl.: C09K 21/10, C09K 21/12

(54) **Filmbildende, wässrige Metallphosphat-Amin-Komplex-Lösungen und deren Verwendung**

(30) Priorität: 10.08.1995 DE 19529408
(71) Anmelder: BAYER AG, 51368 Leverkusen (DE)
(72) Erfinder: Von Bonin, Wulf, Dr., 51519 Odenthal (DE); Jabs, Gert, Dr., 51519 Odenthal (DE); Kirchmeyer, Stephan, Dr., 51375 Leverkusen (DE); Raffel, Bolko, Dr., 41542 Dormagen (DE); Wussow, Klaus, Dr., 57250 Netphen (DE)

(57) **Zusammenfassung**

Filmbildende, wäßrige Metallphosphat-Amin-Komplex-Lösungen, die Produkte der summarischen Zusammensetzung (I) enthalten

A_{1 bis 5}B_{0 bis 12}P_{3 bis 9}N_{4 bis 12}M_{0 bis 9}H_{0 bis 6} (I),

in der
- A: eine oder mehrere Metallverbindungen aus der Gruppe der Hydroxide, Oxide und Carbonate von Aluminium, Magnesium, Kalzium und Zink bedeutet,
- B: eine oder mehrere Verbindungen aus der Gruppe der Säuren, Oxide und Oxidhydrate des Bors bedeutet,
- P: eine oder mehrere Verbindungen aus der Gruppe der Oxide und Säuren des Phosphors, der Hydratisierungsprodukte von Oxiden des Phosphors, Phosphinsäuren und der Phosphonsäuren bedeutet,
- N: eine oder mehrere Verbindungen aus der Gruppe der Amine, Ammoniak und deren Alkoxylierungsprodukte bedeutet,
- M: Alkalimetallhydroxid, -carbonat oder -bicarbonat bedeutet und
- H: eine oder mehrere Verbindungen aus der Gruppe Harnstoff, der Kohlehydrate und zuckerartigen Verbindungen und der C- und N-Methylolverbindungen bedeutet,
sind dadurch gekennzeichnet, daß sie erhältlich sind, indem man in wäßrigem Medium vorliegende saure Umsetzungsprodukte von Metallverbindungen (A) und phosphorhaltigen Verbindungen (P), gegebenenfalls mit Borverbindungen (B) und stickstoffhaltigen Verbindungen (N) mindestens 30 Minuten unter Rühren bei Temperaturen von mindestens 100°C hält, danach unter Rühren auf Temperaturen unter 100°C abkühlt, dann unter weiterem Rühren gegebenenfalls eine oder mehrere Alkalimetallverbindungen (M) und/oder gegebenenfalls eine oder mehrere Verbindungen (H) zusetzt und schließlich auf Temperaturen unter 45°C abkühlt. Solche Umsetzungsprodukte eignen sich insbesondere zum Einbau in Polyurethan-Polyharnstoff-Schäume und ergeben dort gute Brandschutzeigenschaften. Sie können auch für andere Anwendungen eingesetzt werden.

## Beschreibung

Die vorliegende Erfindung betrifft filmbildende, wäßrige Metallphosphat-Amin-Komplex-Lösungen, die in spezieller Weise thermisch nachbehandelt werden und die Verwendung solcher Lösungen, insbesondere zur Herstellung von Schaumstoffen, die sich durch besondere Widrigkeit auszeichnen.

Gewisse wäßrige Lösungen von Umsetzungsprodukten aus Aminen und Amin-Borsäure-Addukten mit sauren Metallphosphaten sind bekannt (siehe z.B. DE-A1 4 226 044). Solche Lösungen sind bei Raumtemperatur fließfähig und klar. Sie können z.B. zwischen zwei Glasscheiben eingefüllt werden und ergeben dann dort beim Tempern bei Temperaturen zwischen 70 und 95°C in kurzer Zeit feste, relativ schmelzstabile Gele. Um vorzeitiges Gelieren oder unerwünschten Viskositätsanstieg zu vermeiden, wurden solche Lösungen bisher auch möglichst bei Temperaturen unter 100°C hergestellt und während der Herstellung und Lagerung höheren Temperaturen höchstens nur ganz kurzzeitig ausgesetzt.

Es wurden nun filmbildende, wäßrige Metallphosphat-Amin-Komplex-Lösungen, die Produkte der folgenden summarischen Zusammensetzungen (I) enthalten, gefunden,

A_{1 bis 5}B_{0 bis 12}P_{3 bis 9}N_{4 bis 12}M_{0 bis 9}H_{0 bis 6} (I),

in der
- A: eine oder mehrere Metallverbindungen aus der Gruppe der Hydroxide, Oxide und Carbonate von Aluminium, Magnesium, Kalzium und Zink bedeutet,
- B: eine oder mehrere Verbindungen aus der Gruppe der Säuren, Oxide und Oxidhydrate des Bors bedeutet,
- P: eine oder mehrere Verbindungen aus der Gruppe der Oxide und Säuren des Phosphors, der Hydratisierungsprodukte von Oxiden des Phosphors, der Phosphinsäuren und der Phosphonsäuren bedeutet,
- N: eine oder mehrere Verbindungen aus der Gruppe der Amine, Ammoniak und deren Alkoxylierungsprodukte bedeutet,
- M: Alkalimetallhydroxid, -carbonat oder -bicarbonat bedeutet und
- H: eine oder mehrere Verbindungen aus der Gruppe Harnstoff der Kohlehydrate und zuckerartigen Verbindungen und der C- und N-Methylolverbindungen bedeutet,
die dadurch gekennzeichnet sind, daß sie erhältlich sind, indem man in wäßrigem Medium vorliegende saure Umsetzungsprodukte von Metallverbindungen (A) und phosphorhaltigen Verbindungen (P), gegebenenfalls mit Borverbindungen (B) und stickstoffhaltigen Verbindungen (N) intensiv vermischt, dann mindestens 30 Minuten unter Rühren bei Temperaturen von mindestens 100°C hält, danach unter gutem Rühren auf Temperaturen unter 100°C abkühlt, dann unter weiterem Rühren gegebenenfalls eine oder mehrere Alkalimetallverbindungen (M) und/oder gegebenenfalls eine oder mehrere der Verbindungen (H) zusetzt und schließlich auf Temperaturen unter 45°C abkühlt.

Gemäß einer bevorzugten Ausführungsform werden erfindungsgemäßen Lösungen Ammoniumphosphate, z.B. (NH₄)₂HPO₄ zugesetzt. Dieser Zusatz erfolgt vorzugsweise bei Temperaturen unter 100°C, insbesondere bei 50 bis 70°C, und verbessert im allgemeinen die Brandwidrigkeit der mit solchen Lösungen hergestellten Produkte.

Bevorzugt enthalten erfindungsgemäße Lösungen Produkte der summarischen Zusammensetzung

A_{1 bis 4}B_{3 bis 9}P₆N_{6 bis 9}M_{0 bis 3}H_{0 bis 3} (II),

in der die verwendeten Symbole die bei Formel (I) angegebene Bedeutung haben.

Bei den Produkten (I) und (II) ist folgendes bevorzugt:
- A =: Aluminiumhydroxid und/oder Magnesiumhydroxid,
- B =: o-Borsäure,
- P =: o-Phosphorsäure, Meta-, Pyro- und Polyphosphorsäuren, (Poly)-Carboxybutyl-, Methyl- und (Alkyl)Phenylphosphonsäure und Methylphosphonsäure,
- N =: primäre, sekundäre und tertiäre, geradkettige, verzweigte und cyclische Alkylamine (z.B. mit 1 bis 20 C-Atomen), primäre, sekundäre und tertiäre araliphatische, heterocyclische und aromatische Amine (z.B. mit 5 bis 20 C-Atomen), Ammoniak und Ethoxylierungs- und Propoxylierungsprodukte davon, insbesondere Alkanolamine wie Ethanolamin, Propanolamin, Di- und Triethanolamin und -propanolamin und entsprechende Mischalkoxylierungsprodukte, ganz besonders Monoethanolamin,
- M =: Natriumhydroxid und
- H =: Harnstoff, Pentaerythrit, Trimethylolpropan, Zuckeralkohole, Resole, Harnstoff- und Melamin-Methylolverbindungen und Kohlehydrate, insbesondere Harnstoff und Kohlehydrate.

Nach dem Vermischen der einzelnen Komponenten hält man das Gemisch vorzugsweise 45 bis 180 Minuten bei Temperaturen von mindestens 100°C. Die Temperaturen können dabei z.B. 100 bis 170°C, vorzugsweise 100 bis 110°C, betragen. Man kann dies z.B. durch Kochen am Rückfluß oder durch Erhitzen in einem geschlossenen Gefäß erreichen. Vorzugsweise wird abschließend auf Temperaturen von unter 30°C abgekühlt. Es ist vorteilhaft, während des Haltens der Temperatur von mindestens 100°C und dem abschließenden Abkühlen intensiv zu rühren.

Das Vermischen der Komponenten A, B, P und N erfolgt vorzugsweise so, daß man die Komponentenpaare A und P einerseits und B und N andererseits, vorzugsweise in Gegenwart von Wasser, getrennt bei jeweils 50 bis 100°C in klare Lösungen überführt und dann diese Lösungen unter intensivem Rühren vermischt. Während des Haltens des Gemisches bei Temperaturen von mindestens 100°C kann man im Rahmen der summarischen Zusammensetzung (I) weitere Anteile der Komponenten A und/oder B zufügen und so die entstehende erfindungsgemäße Lösung modifizieren. Während der Abkühlphase kann man z.B. bei Temperaturen von 40 bis 75°C gegebenenfalls die Komponenten M und/oder H und/oder Ammoniumphosphate zusetzen und lösen.

Es ist ausgesprochen überraschend im Hinblick auf den Stand der Technik, gemäß dem durch Erhitzen auf Temperaturen zwischen z.B. 70 und 95°C temperaturstabile Gele entstehen, daß bei den erfindungsgemäßen Produkten, die mindestens 30 Minuten unter Rühren auf Temperaturen von mindestens 100°C erhitzt wurden, auch bei ruhigem Tempern bei z.B. 90°C keine Gelbildung eintritt. Eine gewisse Viskositätserhöhung kann, wenn überhaupt, beim anschließenden Abkühlen auftreten. Eine derartige "Gelierungstendenz" kann durch Zusätze von Verbindungen des Typs (H) bei Temperaturen von z.B. unter 100°C, vorzugsweise unter 70°C, unterbunden werden. Zusätze von Harnstoff bei Temperaturen über 100°C begünstigen die Abspaltung von Kohlendioxid, was im allgemeinen nicht erwünscht ist.

Die erfindungsgemäßen Lösungen sind filmbildend, in weiten Temperaturbereichen flüssig und deshalb gut lagerfähig und handhabbar.

Erfindungsgemäße Lösungen und daraus z.B. durch Trocknung bei Temperaturen von 15 bis 200°C, vorzugsweise 90 bis 180°C, nach z.B. Sprühtrocknungs-, Walzentrocknungs-, Destillations-, Umluft-, Schnecken- und Extrusionsverfahren oder im Heizschrank erhältliche Feststoffe, die z.B. als Granulate, Pulver oder in wiederum gelöster Form vorliegen können, eignen sich zur Herstellung von brandwidrigen Formteilen, Beschichtungen und Imprägnierungen sowie als Bindemittel und Klebstoffe. Bei den Bindemitteln kann es sich z.B. um solche für blähfähige Graphite, Korke, Früchte und Füllstoffe handeln, wobei als Füllstoffe z.B. solche in Frage kommen, wie sie weiter unten als mineralische und organisch-polymere Füllstoffe für Polyurethan-Polyharnstoff-Schaumstoff beschrieben sind. Insbesondere können sie verwendet werden, um gegebenenfalls zelligen Polyurethanen und Polyurethanharnstoffen verbesserte Brandschutzeigenschaften, z.B. hinsichtlich Brand- und Flammwidrigkeit, zu verleihen. Beispielsweise kann man dabei so vorgehen, daß man erfindungsgemäße Lösungen als integrierten Bestandteil bei der Herstellung von Isocyanat-getriebenen Schaumstoffen verwendet. Gegenüber Isocyanat-getriebenen Schaumstoffen, die mit bei Temperaturen von 70 bis 95°C hergestellten, gelierfähigen Umsetzungsprodukten aus Metall-Phosphorverbindungen und Aminen erhalten wurden, zeigen isocyanatgetriebene Schaumstoffe mit erfindungsgemäß bei Temperaturen von mindestens 100°C hergestellten Lösungen aus Metall-Phosphorverbindungen und Aminen überraschenderweise deutlich verbesserte Brandschutzeigenschaften.

Isocyantgetriebene Schaumstoffe, die als integrierten Bestandteil erfindungsgemäße Umsetzungsprodukte enthalten, können nach an sich bekannten Methoden der Polyurethantechnologie hergestellt werden. So kann man bekannte Polyurethan-Polyharnstoff-Rezepturen zur Herstellung von Schaumstoffen auf der Basis von Polyolen und Polyisocyanaten abwandeln, indem man erfindungsgemäße Lösungen als integrierte Reaktionskomponente einsetzt.

Überraschenderweise entstehen dabei Polyurethan-Polyharnstoff-Schaumstoffe mit in integrierter Form vorliegenden, d. h. anscheinend mehr oder weniger homogen in das Polymermaterial, z.B. in die Zellwände, eingebauten Metallphosphat-Aminsalz-Addukten. Dabei können sowohl Schaumstoffe mit niedrigen Raumgewichten und zäh-elastischen Eigenschaften, als auch spröde Hartschäume erhalten werden.

Es ist weiterhin überraschend, daß die stark polaren, weitgehend anorganischen Metall-Phosphorverbindung-Aminsalz-Reaktionskomponenten weitgehend homogen in das Schaumstoffgerüst eingebaut und integriert werden. Die Zellwände wirken bei mikroskopischer Betrachtung wie kleine, klare Glasscheiben.

Schließlich ist es überraschend, daß der durch die wäßrigen Lösungen eingeschleppte hohe Wasseranteil die Schaumstoffbildung nicht negativ beeinflußt, sondern, daß leichte, gleichmäßig feinporige und stabile, homogen wirkende Schaumstofformteile erhalten werden können, ohne daß eine stöchiometrisch ausreichende, also auch alles Wasser bindende Polyisocyanatmenge Einsatz finden müßte.

Die vorliegende Erfindung betrifft deshalb auch insbesondere Polyurethan-Polyharnstoff-Schaumstoffe, die dadurch gekennzeichnet sind, daß sie erfindungsgemäße Lösungen in einer solchen Menge eingebaut enthalten, daß über 20 Gew.-% der in diesen Lösungen enthaltenen Produkte der summarischen Zusammensetzung (I) in den Schaumstoffen eingebaut sind.

Bevorzugt enthalten erfindungsgemäße Polyurethan-Polyharnstoff-Schaumstoffe 50 bis 75 Gew.-% der in erfindungsgemäßen Lösungen enthaltenen Produkte der summarischen Zusammensetzung (I), die vorzugsweise fein verteilt und mit dem bloßen Auge und dem Mikroskop nicht als separate Teilchen erkennbar sind.

Erfindungsgemäße Polyurethan-Polyharnstoff-Schaumstoffe kann man z.B. herstellen, indem man zu an sich zur Herstellung von Polyurethan-Polyharnstoff-Schaumstoffen bekannten Mischungen aus Polyisocyanaten und Reaktions- und gegebenenfalls Wirkstoff- und Additivkomponenten als weitere Reaktionskomponente erfindungsgemäße wäßrige Lösungen hinzufügt.

Im folgenden wird häufig nur von Aminkomplexen von Metallphosphaten gesprochen. Diese umfassen aber auch Komplexe, die nicht nur aus Orthophosphaten, sondern auch aus anderen, oben für (P) angegebenen Phosphorverbindungen, z.B. Methylphosphonsäure, hervorgegangen sind. D. h. im folgenden werden die in erfindungsgemäßen Lösungen enthaltenen Produkte der summarischen Zusammensetzung (I) häufig als Aminkomplexe von Metallphosphaten bezeichnet.

Aminkomplexe von Metallphosphaten zur Herstellung erfindungsgemäßer Polyurethan-Polyharnstoff-Schaumstoffe entsprechen hinsichtlich ihrer summarischen Zusammensetzung der Formel (I), vorzugsweise der Formel (II). Detaillierte Angaben zur summarischen Zusammensetzung und den möglichen Komponenten zur Herstellung von geeigneten Aminkomplexen von Metallphosphaten sind beispielsweise auch enthalten in folgenden DE-OS'en: 3 833 977, 3 912 552, 4 023 310, 4 126 702, 4 221 925, 4 226 044, 4 236 936, 4 314 299, 4 339 474, 4 414 331, 4 439 194, 4 401 636. Wesentlich ist, daß Aminkomplexe von Metallphosphaten zur Herstellung von erfindungsgemäßen Polyurethan-Polyharnstoff-Schaumstoffen durch mindestens 30minütiges Erwärmen auf Temperaturen von mindestens 100°C hergestellt wurden.

Wäßrige Lösungen von Aminkomplexen von Metallphosphaten können für den erfindungsgemäßen Einsatz als Komponente in Reaktionsgemischen für die Schaumstoffherstellung Wassergehalte von beispielsweise weniger als 50 Gew.-% aufweisen. Bevorzugt sind Wassergehalte von 10 bis 40 Gew.-%, insbesondere von 15 bis 30 Gew.-%.

Bei der Herstellung von Polyurethan-Polyharnstoff-Schaumstoffen werden im allgemeinen Polyisocyanate (beispielsweise auf der Basis von Anilin-Formaldehyd-Kondensaten) zur Umsetzung gebracht mit im Gemisch oder einzeln in den Reaktionsraum eingebrachten Reaktions- und gegebenenfalls Wirkstoff- und Additivkomponenten, denen erfindungsgemäß nunmehr noch die wäßrigen Lösungen von Aminkomplexen von Metallphosphaten als weitere Reaktionskomponente hinzugefügt werden.

Folgende Komponenten haben sich als besonders geeignet erwiesen:

Als Reaktionskomponenten:
aliphatische, vorzugsweise tertiäre Alkoxylierungsprodukte, insbesondere Ethoxylierungs- und Propoxylierungsprodukte von Ammoniak und Polyaminen mit 2 bis 12, vorzugsweise 2 bis 8, Aminogruppen. Solche Alkoxylierungsprodukte können z.B. OH-Zahlen von über 50, vorzugsweise von über 350, aufweisen.

Weiterhin besonders geeignet sind Alkanolamine wie Triethanolamin und Tripropanolamin und Ethoxylierungs- und Propoxylierungsprodukte von Triethanolamin, Ethylendiamin, Polyethylenpolyaminen und deren Gemischen. Ganz besonders bevorzugt sind Triethanolamin und seine Propoxylierungsprodukte mit OH-Zahlen zwischen 300 und 600.

Diese Reaktionskomponenten können jeweils alleine, in beliebigen Gemischen untereinander und im Gemisch mit sonstigen bekannten Reaktionskomponenten, die mit Isocyanaten reaktionsfähige Gruppierungen enthalten, eingesetzt werden. Als Beispiele seien genannt: Polyetherpolyole mit anderen z.B. nichtbasischen Startern oder anderen OH-Zahlen, solche mit Carboxylendgruppen, Zuckerpolyole auf der Basis alkoxylierter Zucker, Ester- und Polyesterpolyole, Polyether- oder Polyesterpolyamine und deren Alkoxylierungsprodukte, gegebenenfalls in wäßriger Lösung vorliegende Mono-, Di- und Polysaccharide, Poly-N-Methylolverbindungen, z.B. von Melamin und Harnstoff, Resole und N-Alkanolamide.

Als gegebenenfalls vorhandene Wirkstoffkomponenten:

Stabilisatoren, vorzugsweise solche auf Polyether-Polysiloxan-Basis, zur pH-Regulierung geringe Mengen an Phosphorsäure oder an wäßrigen z.B. 20 bis 50 gew.-%igen Natriumhydroxid-, Kaliumhydroxid- und Ammoniaklösungen, primäre und sekundäre Amine und Monoethanolamin, Aktivatoren wie sie aus der Polyurethanschaumstofftechnologie bekannt sind, z.B. auf der Basis von tertiären Aminen, Mannickbasen und metallorganischen Verbindungen, Carbonsäuren und deren Metall- bzw. Aminsalze.

Carbonsäuren können auch chlorierte oder bromierte Mono- und Polycarbonsäuren sein, die z.B. 1 bis 150 C-Atome, vorzugsweise 1 bis 60 C-Atome, enthalten. Sie sind bei Raumtemperatur vorzugsweise flüssig. Beispiele sind Ameisensäure, Essigsäure, (Alkyl)Phenylessigsäuren, natürliche Fettsäuren wie Ölsäure, Bromierungsprodukte von Ölsäure, Rizinolsäure, Leinölfettsäuren, Isostearinsäure, Tallölfettsäure, Sojaölfettsäure, Fischölfettsäure, Rapsölfettsäure, sonstige natürliche oder synthetische Fettsäuren und die aus solchen Fettsäuren zugänglichen sogenannten Dimer- und Trimersäuren. Bevorzugt ist die Verwendung von Ölsäure und Ölsäure-haltigen Fettsäuregemischen.

Die Anwendung von Carbonsäuren, insbesondere Fettsäuren, ist für die Erzeugung der erfindungsgemäßen Schaumstoffe nicht zwingend erforderlich. Ihre Anwesenheit führt aber überraschenderweise zu einer erheblichen Beschleunigung der Schaumstoffbildung und zu einem deutlich feinporigerem und leichterem Schaumstoff.

Dieser Effekt läßt sich überraschenderweise durch die Kombination von Fettsäuren, insbesondere Ölsäure, mit Phosphorsäureestern, insbesondere Phosphorsäuretriestern wie Tributylphosphat, Trioctylphosphat und/oder Diphenylkresylphosphat steigern, wobei gleichzeitig überraschend die Brandwidrigkeit in hohem Maße verbessert wird. Man kann gegebenenfalls auch nur Phosphorsäureester und keine Fettsäure einsetzen. Phosphorsäureester können z.B. entweder der Reaktionsvermischung oder dem einzusetzenden Isocyanat zugesetzt werden.

Die Wirkstoffkomponenten können jeweils alleine oder in beliebigen Gemischen untereinander eingesetzt werden.

Als gegebenenfalls vorhandene Additivkomponenten:

Mineralische und organisch-polymere Füllstoffe, Kohlenwasserstoffe, die z.B. niedrig sieden und als Treibmittel fungieren können, wie Pentan und insbesondere Cyclopentan oder hoch sieden und hydrophobierend wirken können, wie Paraffinöle, Paraffinwachse, Polyisobutylene, Polysiloxane, Polyolefine und Polyfluorkohlenwasserstoffpolymere, brandwidrige, flüssige und pulvrige, füllstoffartige Zusätze wie Kaolin, Montmorrillonite, Tone, Aluminiumoxide, Kreiden, Kieselerden, Dolomite, Schwerspat, Gesteinsmehle, Sande, Glaspulver, Glasfasern, Steinwollfasern, Kaolinfasern, Ruß, Kohlen, Koks, Graphite, blähfähige Graphite, Talkum, Glimmer, blähfähige Glimmer, die beiden letzteren Typen auch in ganz oder teilweise expandierter Form, Silikate, Borsilikate, intumeszenzfähige und nichtintumeszenzfähige Brandwidrigkeit vermittelnde Zusätze wie phosphorhaltige Polyole, Ammoniumpolyphosphat, Ethylendiaminphosphat, Mono-, Di- und Triethanolamin-o-Phosphate und o-Borate und deren Mischformen, Melamin, Melaminphosphat, Urazole, Dicyandiamid, Biuret, Amide und Ester von Phosphor- und Phosphonsäuren, insbesondere Phosphorsäuretriester wie Triethyl-, Tributyl- und Trioctylphosphat, Trikresylphosphat, Tris-trichlorethylphosphat und -propylphosphat, vorzugsweise Diphenylkresylphosphat, Ammoniumchlorid, Ammoniumbromid, Hydrohalogenide von Aminen und Metallen wie Natriumbromid und Diethylentriaminhydrobromid und Mono-, Di- und Triethanolamin-hydrobromid, gegebenenfalls in wäßriger Lösung oder Dispersion vorliegende vernetzte, unvernetzte, plastische, elastische oder harte Harze und Polymere natürlicher oder synthetischer Art, sowie Ortho-, Meta-, Pyro- und Polyphosphorsäuren, Salzsäure, Bromwasserstoffsäure, Kieselsäuren, Kieselsole, Titandioxid und Magnesium- und Aluminiumhydroxide.

Die Additivkomponenten können jeweils alleine oder in beliebigen Gemischen untereinander eingesetzt werden.

Man kann die Reaktions-, Wirkstoff- und Additivkomponenten vorgemischt oder einzeln in einen Misch- oder Reaktionsraum einbringen und dabei stöchiometrisch äquivalente Mengen oder um z.B. bis zu ± 30 Gew.-% davon abweichende Mengen mit Polyisocyanaten vermischen und zur Reaktion bringen. Überraschenderweise scheint die schaumbildende und schaumstabilisierende Wirkung der Polyisocyanate weitgehend unabhängig von der Stöchiometrie zu sein.

Als Polyisocyanate kommen z.B. übliche aliphatische, cyclische, araliphatische und aromatische Polyisocyanate und deren Gemische in Frage. Bevorzugt sind aromatische Polyisocyanate wie Toluylendiisocyanate und deren bekannte Modifizierungsprodukte, insbesondere hochsiedende Diphenylmethandiisocyanate, z.B. auf der Basis von Anilin-Formaldehyd-Kondensaten und deren Modifizierungsprodukte, sogenannte MDI-Typen, und Gemische der genannten Isocyanate. Auch Hexamethylendiisocyanat und Isophorondiisocyanat und deren weniger flüchtige Modifizierungsprodukte können verwendet oder mitverwendet werden.

Die hinzuzufügenden Mengen der erfindungsgemäßen wäßrigen Lösungen können beliebig klein sein. Vorzugsweise setzt man 50 bis 85 gew.-%ige, insbesondere 60 bis 80 gew.-%ige, wäßrige Lösungen von erfindungsgemäßen Aminkomplexen von Metallphosphaten in solchen Mengen zu, daß die enthaltene Menge an Aminkomplexen von Metallphosphaten im gesamten Reaktionsgemisch einen Gewichtsanteil von mehr als 20 Gew.-%, vorzugsweise mehr als 45 Gew.-%, insbesondere 50 bis 75 Gew.-%, ausmacht.

Dementsprechend kann in stöchiometrischer Hinsicht die zum Einsatz kommende Menge an Polyisocyanat auch höher sein, als die für die konventionellen Rezepturbestandteile äquivalente Polyisocyanatmenge. Die Isocyanatmenge kann z.B. 70 bis 300 Gew.-%, vorzugsweise 75 bis 200 Gew.-%, der Menge betragen, die zu den konventionellen Rezepturbestandteilen äquivalent ist.

Erfindungsgemäße Polyurethan-Polyharnstoff-Schaumstoffe kann man herstellen, wenn man, bezogen auf insgesamt vorhandene Komponenten ohne Polyisocyanat und ohne Füllstoffe, z.B. folgende Mengen einsetzt:
a) mehr als 5 Gew.-%, vorzugsweise 20 bis 85 Gew.-%, insbesondere 50 bis 80 Gew.-%, erfindungsgemäße Aminkomplexe von Metallphosphaten;
b) 5 bis 30 Gew.-%, vorzugsweise 8 bis 20 Gew.-%, Reaktionskomponenten;
c) 0 bis 6 Gew.-%, vorzugsweise 0,5 bis 5 Gew.-%, Stabilisatoren und pH-Regulatoren,
d) 0 bis 10 Gew.-%, vorzugsweise 2 bis 6 Gew.-%, Carbonsäuren und/oder Phosphorsäuretriester und
e) 0 bis 15 Gew.-%, vorzugsweise 5 bis 12 Gew.-%, Treib- und Hydrophobierungsmittel.

Diese Füllstoffe nicht berücksichtigende Richtrezeptur kann sich erheblich verändern, wenn größere Mengen Füllstoffe mitverwendet werden.

Die verschiedenen zum Reaktionsgemisch gehörenden Komponenten können einzeln oder ganz oder teilweise in vorgemischter Form unter intensiver Durchmischung mit den Isocyanaten zusammengeführt werden. Das intensiv vermischte Reaktionsgemisch kann in offene oder geschlossene Formen überführt oder auf Substrate aufgetragen werden und steigt dann zu einem Schaumstoff auf.

Da die erfindungsgemäß mitzuverwendenden, wäßrigen Aminkomplexe von Phosphaten das Reaktionsgemisch stark kühlen, reicht die sich einstellende Reaktionstemperatur oftmals nicht aus, um die gegebenenfalls mitverwendeten Treibmittel (z.B. Cyclopentan) oder das entstehende Kohlendioxid zu einem guten Aufschäumen zu veranlassen. Daher ist es oftmals zweckmäßig, das Reaktionsgemisch oder einzelne Komponenten davon zusätzlich zu erwärmen, entweder vor, bei oder nach der Zusammenführung der verschiedenen Komponenten.

Die Erwärmung kann z.B. durch Mikrowellen, Wechselfelder, IR-Strahlung, Erhitzung mittels heißen Gasen oder Einstellen oder Hindurchführen der Reaktionskomponenten oder des Reaktionsgemisches in oder durch einen Wärmetauscher oder Ofen erfolgen. Hier haben sich Temperaturen von 30 bis 120°C, insbesondere 35 bis 95°C, gut bewährt. Bei diesen und höheren Temperaturen, z.B. bis 200°C und mit ähnlichen Verfahren können die Schaumstoffe, falls gewünscht, auch getrocknet werden.

Man kann auch den erfindungsgemäßen Polyurethan-Polyharnstoff-Schaumstoffen entsprechende massive Massen herstellen, z.B. indem man ohne Treibmittel und gegebenenfalls unter Überdruck arbeitet oder die Schaumstoffe bei Temperaturen von 120 bis 250°C komprimiert.

Die Herstellung erfindunsgemäßer Polyurethan-Polyharnstoff-Schaumstoffe kann prinzipiell nach den in der Polyurethan-Schaumstofftechnik üblichen, batchweisen oder kontinuierlichen, Hochdruck-, Mitteldruck- oder Niederdruck-Vermischungsverfahren, z.B. mittels Düsen- oder Rührwerksmischköpfen erfolgen. Ebenso können Sprüh- und Spritzverfahren, Rotationsguß-, Doppelband-Produktions- und Formverschäumungsverfahren in offenen und geschlossenen, beheizten und unbeheizten Formen, drucklos und unter Druck angewendet werden.

Erfindungsgemäße Polyurethan-Polyharnstoff-Schaumstoffe haben in getrocknetem oder bei Raumklima konditioniertem Zustand im allgemeinen Raumgewichte zwischen 15 und 500 g/l, vorzugsweise zwischen 18 und 50 g/l. Sie haben im Temperaturbereich zwischen z.B. 100 und 250°C, vorzugsweise zwischen 120 und 180°C, thermoplastischen Charakter und können entsprechend gebogen, sonstig verformt, geprägt oder verschweißt werden.

Die Oberflächen der Schaumstoffe können z.B. nach dem Heißpreßverfahren verdichtet und/oder geformt und/oder mit Metallfolien, Kunststoffolien, Geweben und/oder Gewirken aus organischen oder mineralischen Fasern kaschiert oder beklebt werden.

Erfindungsgemäße Schaumstoffe können vor allem Anwendung finden im Isolier-, Akustik-, Verpackungs- und Brandschutzbereich, wobei die Brandwidrigkeit und niedrige Brandlast sowie geringe Rauchgasentwicklung der Schaumstoffe von besonderem Interesse ist. Für brandwidrige Akustikdämmstoffe ist die leicht erzielbare Offenporigkeit erfindungsgemäßer Schaumstoffe günstig.

Sie können auch zur Herstellung von Sandwichteilen mit den verschiedensten Deckschichten verwendet werden. Als Deckschichten kommen z.B. Flächengebilde wie Gewebe, Gelege, Vließe und Folien aus Glas, natürlichen und synthetischen Polymeren, Kunststoffen, Metall, Papier und Holz in Frage. Sie können auch zum Ausfüllen von Hohlräumen, als Fixierhilfen im Bausektor, zur Schalldämmung, als Filter- und Verpackungsmaterial und zur Stoßdämpfung eingesetzt werden.

Es ist auch möglich, erfindungsgemäße Schaumstoffe in Gegenwart von Luft oder Inertgas langsam auf Temperaturen von über 180°C und bis zu 1 100°C, vorzugsweise 200 bis 300°C, zu erhitzen, wobei sie unter Dunkelfärbung in mehr oder weniger offenporige, unbrennbare, spröde Schaumstoffe mit Raumgewichten zwischen z.B. 10 und 120 g/l, vorzugsweise zwischen 30 und 60 g/l übergehen. Diese erreichen häufig die Brandklassifizierung B1 gemäß DIN 4102.

Derartig nachbehandelte erfindungsgemäße Schaumstoffe eignen sich besonders gut für brandwidrige Formteile im Wärme- und Schalldämmbereich, z.B. für Deckenplatten.

Da erfindungsgemäße Schaumstoffe vielfach offenporig erhalten werden können, sind sie auch gut zur Herstellung von sogenannten Vacuumpaneelen geeignet. Bei diesen wird der Schaumstoff zumeist durch eine Metall- oder Kunststoffolie oder sonstige gasdichte Deckschicht luftdicht abgedeckt und dann evakuiert.

Erfindungsgemäße Schaumstoffe können auch durch Walken, wiederholtes Pressen oder Führen durch Walzenpaare in ihrem Härtecharakter von hart oder halbhart bis weich modifiziert werden. So modifizierte Schaumstoffe sind für Polster- und Verpackungszwecke gut geeignet.

Erfindungsgemäße Schaumstoffe können verklebt, gesägt, mechanisch, hydraulisch und thermisch getrennt, spanabhebend oder durch thermische Verfahren bearbeitet, geprägt oder mehrdimensional verformt und geschweißt werden.

Im Folgenden wird die Herstellung erfindungsgemäßer Lösungen, deren Verwendbarkeit, insbesondere zur Herstellung von erfindungsgemäßen Schaumstoffen und die vergleichende Prüfung der Brandwidrigkeit dieser Schaumstoffe beispielhaft erläutert. Die angegebenen Teile und Prozente beziehen sich auf das Gewicht, sofern nichts anderes vermerkt ist.

### Beispiele

### Beispiel 1

### Herstellung der Basislösung AA zu Vergleichszwecken.

### Lösung a)

2 Mol Aluminiumhydroxid wurden in 6 Mol 85%iger, technischer o-Phosphorsäure bei 100°C gelöst und dann auf 50°C abgekühlt.

### Lösung b)

3 Mol Borsäure wurden bei 80°C in 6 Mol Monoethanolamin aufgelöst, mit 8 Mol Wasser verdünnt und auf 30°C abgekühlt.

### c) Basislösung AA

Die Lösung a) wurde unter intensiver Vermischung in 10 Minuten zur Lösung b) hinzugegeben, wobei die Temperatur auf 90°C anstieg.

Bei dieser Temperatur wurde 2 Stunden nachgerührt und dann auf Raumtemperatur abgekühlt.

Man erhielt eine klare Lösung, deren pH-Wert in Mischung mit gleichen Teilen Wasser 6,2 betrug. Die Viskosität bei 20°C war 4 500 mPa·s. Ein auf einer Glasplatte ausgegossener dünner Film trocknete über Nacht bei Raumklima (23°C, 50 % rel. Luftfeuchtigkeit) zu einem harten, klaren Film auf. Der Feststoffgehalt der Basislösung AA betrug 75 %.

Eine Probe der Lösung wurde in einem verschlossenen Gefäß auf 90°C erhitzt, wobei sie im Verlauf von 4,5 Stunden zu einem festen Gel erstarrte. Dann wurde das Gefäß mit einem Heißluftstrom von 140°C beaufschlagt. Innerhalb von 5 Minuten verflüssigte sich das Gel nicht.

### Beispiel 2

### Herstellung der Basislösung AB zu Vergleichszwecken.

1 550 Teile der Lösung AA (siehe Beispiel 1) wurden mit 185 Teilen o-Borsäure versetzt und bei 60°C bis zur Bildung einer klaren Lösung gerührt. Der pH-Wert der stark gepufferten Lösung betrug 6,2, die Viskosität bei 30°C 4 000 mPa·s.

### Beispiel 3

### Herstellung der Basislösung AH zu Vergleichszwecken.

Es wurde gearbeitet wie zur Herstellung der Lösung AB (siehe Beispiel 2), jedoch wurden anstelle von Borsäure 180 Teile Harnstoff eingesetzt. Die erhaltene klare Lösung hatte einen pH-Wert von 6,2 und eine Viskosität von 3 500 mPa·s bei 20°C.

### Beispiel 4

### Herstellung der Basislösung AHB zu Vergleichszwecken.

Es wurde gearbeitet wie zur Herstellung der Lösung AB (siehe Beispiel 2), jedoch wurden zusätzlich zur Borsäure nach Abkühlung auf 70°C 3 Mol Harnstoff eingesetzt. Man erhielt eine klare Lösung mit einem pH-Wert von 6,3 und einer Viskosität von 3 800 mPa·s bei 20°C.

### Beispiel 5

### Herstellung der Basislösung AHBZ zu Vergleichszwecken.

Es wurde gearbeitet wie bei der Herstellung der Lösung AHB (siehe Beispiel 4), jedoch wurden zusätzlich bei 60°C 230 Teile Saccharose mit aufgelöst. Man erhielt eine klare Lösung mit einem pH-Wert von 6,4 und einer Viskosität von 4 200 mPa·s bei 20°C.

### Beispiel 6

### Herstellung der erfindungsgemäßen Lösung BA.

Es wurde verfahren wie in Beispiel 1, jedoch wurde nach der Vereinigung der Lösungen a) und b) 2 Stunden am Rückfluß gekocht (Heizbadtemperatur 150 bis 160°C, Innentemperatur ca. 105°C) und dann unter gutem Rühren auf Raumtemperatur abgekühlt. Man erhielt eine klare Lösung vom pH-Wert von 6,2 und einer Viskosität von 11 000 mPa·s. bei 20°C.

Eine Probe dieser Lösung wurde analog Beispiel 1 im geschlossenen Gefäß erhitzt. Bei 90°C gelierte sie nicht. Beim Abkühlen danach bildete sich eine hochviskose Masse, die sich beim Beaufschlagen mit dem Heißluftstrom unter Aufkochen verflüssigte. Gemäß Beispiel 6 war demnach eine im Vergleich zu Beispiel 1 neue Lösung mit anderen Eigenschaften erhalten worden.

### Beispiel 7

### Herstellung der erfindungsgemäßen Lösung BB.

Die Lösung AB (siehe Beispiel 2), wurde 2 Stunden am Rückfluß gekocht und dann unter gutem Rühren abgekühlt. Man erhielt eine klare Lösung mit einem pH-Wert von 6,2 und mit einer Viskosität von 4 000 mPa·s. bei 20°C.

### Beispiel 8

### Herstellung der erfindungsgemäßen Lösung BH.

Die Lösung AA (siehe Beispiel 1) wurde unter gutem Rühren 2 Stunden am Rückfluß gekocht und dann unter weiterem guten Rühren auf 70°C abgekühlt. Dann fügte man 180 Teile Harnstoff hinzu und löste unter weiterem guten Rühren und während des Abkühlens den Harnstoff auf. Man erhielt eine klare Lösung mit einem pH-Wert von 6,3 und einer Viskosität von 4 800 mPa·s. bei 20°C.

### Beispiel 9

### Herstellung der erfindungsgemäßen Lösung BHB.

Es wurde verfahren wie bei der Herstellung der Lösung BB (siehe Beispiel 7), jedoch wurden beim Abkühlen, sobald 70°C erreicht waren, noch 180 Teile Harnstoff zugesetzt und unter weiterem guten Rühren und Abkühlen auf Raumtemperatur gelöst. Man erhielt eine klare Lösung vom pH-Wert von 6,3 und einer Viskosität von 4 400 mPa·s. bei 20°C.

### Beispiel 10

### Herstellung der erfindungsgemäßen Lösung BHBZ.

Es wurde gearbeitet wie im Beispiel 9, jedoch wurden zusammen mit dem Harnstoff 230 Teile Saccharose mit gelöst. Man erhielt eine klare Lösung mit einem pH-Wert von 6,3 und einer Viskosität von 4 600 mPa·s. bei 20°C.

### Beispiel 11

### Herstellung von Schaumstoffen (I).

Unter Verwendung von korrespondierenden Vergleichslösungen (aus den Beispielen 1 bis 5) und erfindungsgemäß thermisch behandelten Lösungen (aus den Beispielen 6 bis 10) wurden, um die Vergleichbarkeit der Brandeigenschaften der jeweilig erhältlichen Schaumstoffe zu berücksichtigen, nach folgender, jeweils gleichartiger Rezeptur Schaumstoffe hergestellt.

**Tabelle 1**

| Vormischung: | | |
|---|---|---|
| Komponente | Versuchsreihe | |
| | 1 | 2 |
| | Gewichtsteile | |
| Metallphosphat-Aminsalz-Lösung | 300 | 450 |
| Triethanolamin | 20 | 20 |
| propoxyliertes Triethanolamin (OH-Zahl 501) | 25 | 25 |
| Ölsäure | 12,5 | 12,5 |
| Monoethanolamin | 5 | 12 |
| Polysiloxan-Stabilisator | 2 | 2 |
| Cyclopentan | 30 | 30 |

Jede dieser Vormischungen wurde intensiv gemischt und dann intensiv mit 110 Teilen eines Polyisocyanats vom MDI-Typ (Desmodur® 44 V 20, Bayer AG) verrührt. Die Reaktionsmischung aus Vormischung und Polyisocyanat wurde unmittelbar vor dem Aufschäumen in eine mit Papier ausgekleidete Kastenform gegossen in der sie zu einem feinporigen und homogen wirkenden Schaumstoffblock aufschäumte. Dieser wurde bei 50°C im Umluftstrom bis zur Gewichtskonstanz getrocknet.

Bei Versuchsreihe 1 wurden Schaumstoffe mit einem Trocken-Raumgewicht von ca. 33 g/l und Versuchsreihe 2 solche mit einem Trocken-Raumgewicht von ca. 45 g/l erhalten.

### Beispiel 12

### Vergleich der Brandwidrigkeit im Labor-KBS-Test.

Aus den gemäß Beispiel 11 erhaltenen Schaumstoffen wurden 2 cm dicke Scheiben geschnitten, die bei 60 % rel. Luftfeuchtigkeit und 23°C 3 Tage konditioniert und dann zu Prüfstreifen mit den Maßen 20 x 5 x 2 cm geschnitten wurden.

Die Prüfstreifen wurden so in einen schachtförmigen Drahtnetzschacht an den Kanten jeweils 2 cm überlappend eingestellt, daß sie einen kleinen Kamin mit einem quadratischen, lichten Innenquerschnitt von 3 x 3 cm bildeten.

Der so gebildete Brandschacht wurde senkrecht stehend im Abstand von 5 cm mittig über einem Erdgas-Rundflächenbrenner (gedrosselte Luftzufuhr, Durchmesser der Basis des Flammenfledes 2,5 cm) einjustiert. Dann wurde die Flamme gezündet und nach 30 Sekunden wieder gelöscht.

Es wurde beobachtet, wie lange nach dem Löschen der Brenneflamme der Schaumstoff im Drahtkorb noch brannte, d.h. noch Flammen sichtbar waren (sogenannte Nachbrennzeit).

Unter jeweils identischen Bedingungen erwiesen sich die ermittelten Nachbrennzeiten als relativ gut reproduzier- und vergleichbar und erlaubten eine gute Relativbeurteilung der Brandwidrigkeit der Schaumstoffe.

Der Versuch wurde mit stets neuen vier konditionierten, gleichartigen Prüfstreifen unter genau gleichen Bedingungen 5 mal wiederholt und die Nachbrennzeit als Durchschnitts-Sekunden-Meßwert ermittelt. Einzelheiten siehe Tabelle 2.

**Tabelle 2**

| Schaum aus Lösung | Nachbrennzeit (sek.) Versuchsreihe | |
|---|---|---|
| | 1 | 2 |
| AA zum Vergleich | >30 | >30 |
| BA erfindungsgemäß | 25 | 22 |
| AB zum Vergleich | 28 | 25 |
| BB erfindungsgemäß | 18 | 12 |
| AH zum Vergleich | >30 | >30 |
| BH erfindungsgemäß | 12 | 13 |
| AHB zum Vergleich | 21 | 25 |
| BHB erfindungsgemäß | 8 | 12 |
| AHBZ zum Vergleich | 15 | 17 |
| BHBZ erfindungsgemäß | 3 | 8 |

Aus Tabelle 2 geht hervor, daß erfindungsgemäße Schaumstoffe eine deutlich kürzere Nachbrennzeit und damit verbesserte Flamm- und Brandwidrigkeiten aufweisen als entsprechend, d.h. aus thermisch anders behandelten Metallphosphat-Aminsalz-Lösungen sonst gleicher Zusammensetzung zu Vergleichszwecken hergestellte Schaumstoffe.

Die erfindungsgemäßen Schaumstoffe zeichnen sich außerdem nach optischer Beurteilung durch eine verringerte Rauchgasdichte aus.

Aus den Schaumstoffen der Versuchsreihe 1 ließen sich Isolierelemente für thermische und akustische Isolierungen herstellen. Die Wärmedurchgangszahl betrug durchschnittlich 0,03 W/K m.

### Beispiel 13

### Herstellung der erfindungsgemäßen Lösung BAM:

1530 Teile der Lösung AA (siehe Beispiel 1) wurden mit 59 Teile Mg(OH)₂ gut verrührt und dann unter Rühren 2 Stunden am Rückfluß gekocht. Es bildete sich eine klare Lösung, die unter Rühren auf Raumtemperatur abgekühlt wurde. Sie hatte bei 20°C eine Viskosität von ca. 9500 mPa.s.

Ein aus dieser Lösung aufgetrockneter Film auf einer Glasplatte war klar und auch bei relativen Luftfeuchtigkeiten von 85 % noch klebfrei, während ein aus Lösung AA hergestellter Film leicht klebend war. Das getrocknete Material BAM war bei Einwirkung einer Erdgasbeflammung hoch intumeszent und bildete einen sehr feinporigen Intumenzschaum. Daher ist BAM als Lösung und als Feststoff besonders gut für Brandschutzzwecke, z.B. als Beschichtung Löschwasserzusatz oder Formkörper einsetzbar.

Vergleichbare Ergebnisse wurden erhalten, wenn man anstelle von 1 Mol Mg(OH)₂ entweder 1 Mol Ca(OH)₂ oder 1 Mol Al(OH)₃ oder 1 Mol ZnO verwendete. Im letzteren Falle erhielt man eine trübe Lösung. Filme aus diesen Lösungen hatten ebenfalls eine verringerte Hygroskopizität.

### Beispiel 14

### Herstellung der erfindungsgemäßen Lösung BBN

Diese Lösung wird durch Komplexerweiterung aus Lösung AA hergestellt.

4500 Teile der Lösung AA (siehe Beispiel 1) wurden mit 540 Teilen o-Borsäure versetzt und 2 Stunden am Rückfluß gekocht. Dann ließ man unter gutem Rühren abkühlen und fügte, als 65°C erreicht wurden, noch 630 Teile (NH₄)₂HPO₄ hinzu, die sich bei weiterem Abkühlen innerhalb von 30 Minuten klar auflösten. Diese Lösung hatte bei 23°C eine Viskosität von 4500 mPa.s. Das getrocknete Material zeigte bei Beflammung mit einer Erdgasflamme starke Intumeszenz.

### Beispiel 15

### Herstellung der erfindungsgemäßen Lösung BBNZ

2200 Teile der Lösung BBN (siehe Beispiel 14) wurden auf 60°C erhitzt und unter Rühren mit 244 Teilen Saccharose versetzt, die sich darin innerhalb von 30 Minuten klar auflöste. Diese Lösung hatte bei 21°C eine Viskosität von 4900 mPa.s. Auf Glas trocknete sie zu einem klaren Film auf. Das getrocknete Material zeigte bei Beflammung mit einer Erdgasflamme eine starke Intumeszenz.

### Beispiele 16 bis 37

### Herstellung von Schaumstoffen (II)

Die Beispiele 16 bis 37 beziehen sich auf Schaumstoffe, die analog Beispiel 11 Versuchsreihe 1 hergestellt wurden, bei denen jedoch Ammoniumphosphate oder Phosphorsäureester mit eingebaut oder Ölsäure ganz oder teilweise durch Phosphorsäure ersetzt oder Füllstoffe eingebaut wurden.

Es werden Angaben zur eingesetzten Stammlösung und der vorgenommenen Modifikation gemacht sowie der erhaltene Schaumstoff charakterisiert. "KBS" bedeutet die Nachbrennzeit (bestimmt wie in Beispiel 12 beschrieben), "formbeständig" bedeutet bei Erhitzen eines 20 x 20 x 5 cm großen Prüfkörpers, im Heißluftschrank auf 200°C trat eine Volumenverminderung von weniger als 15 % ein.

### Beispiel 16

Stammlösung BB (siehe Beispiel 7); Ersatz der Ölsäure durch 10 Teile Diphenyl-Kresyl-phosphat.
Raumgewicht trocken: 35 g/l; feinporiger Schaumstoff; KBS: 0 Sekunden; formbeständig.

### Beispiel 17

Stammlösung BBZ (Herstellung analog Beispiel 9; jedoch wurde anstelle von Harnstoff jetzt Saccharose in Lösung BB aufgelöst); zusätzlich 10 Teile Diphenyl-Kresyl-phosphat.
Raumgewicht trocken: 29 g/l; sehr feinporiger Schaumstoff; KBS: 0 Sekunden; formbeständig.

### Beispiel 18

Stammlösung BBN (siehe Beispiel 14).
Raumgewicht trocken: 30 g/l; feines Porenbild; KBS: 8 Sekunden

### Beispiel 19

Stammlösung BBNZ (siehe Beispiel 15).
Raumgewicht trocken: 30 g/l; feines Porenbil; KBS: 3 Sekunden

### Beispiel 20

Stammlösung BBN (siehe Beispiel 14); 10 Teile Ölsäure und 10 Teile Diphenyl-Kresyl-phosphat.
Raumgewicht trocken: 30 g/l; KBS: - 4 Sekunden (d.h. die Flamme erlosch bereits 4 Sekunden vor dem Abstellen des Brenners).

### Beispiel 21

Stammlösung BBNZ (siehe Beispiel 15); 10 Teile Ölsäure und 10 Teile Diphenyl-Kresyl-phosphat.
Raumgewicht trocken: 28 g/l; feines Porenbild; KBS: -14 Sekunden.

### Beispiel 22

Stammlösung BB (siehe Beispiel 7); zusätzlich 30 Teile Aluminiumpulver.
Raumgewicht trocken: 30 g/l; grau-silbriger, feinporiger Schaumstoff; KBS: 25 Sekunden; formstabil.

### Beispiel 23

Stammlösung BB (siehe Beispiel 7); zusätzlich 30 Teile Melaminpulver.
Raumgewicht trocken: 34 g/l; KBS: 18 Sekunden.

### Beispiel 24

Stammlösung BB (siehe Beispiel 7); zusätzlich 50 Teile 75%ige wäßrige Lösung eines handelsüblichen Methylol-Melamin-Harz (Madurit® 550, Cassella).
Raumgewicht trocken: 29 g/l; KBS: 15 Sekunden.

### Beispiel 25

Stammlösung BB (siehe Beispiel 7); zusätzlich 30 Teile Silikonöl (Typ M 100, Bayer AG).
Raumgewicht trocken: 32 g/l; KBS: 30 Sekunden.

### Beispiel 26

Stammlösung BB (siehe Beispiel 7); zusätzlich 1 Teil Stabilisator, 5 Teile Ethanolamin und 80 Teile Polyisocyanat.
Raumgewicht trocken: 37 g/l; KBS: 29 Sekunden; formstabil.

### Beispiel 27

Stammlösung BBN (siehe Beispiel 14); zusätzlich 15 Teile Glasfasern, Stapel, 6 mm Länge.
Raumgewicht trocken: 35 g/l; KBS: 16 Sekunden; formstabil.

### Beispiel 28

Stammlösung BB (siehe Beispiel 7); zusätzlich 60 Teile handelsüblicher mit Ammoniak neutralisierter blähfähiger Graphit vom Sulfat-Typ.
Raumgewicht trocken: 38 g/l; KBS: 0 Sekunden; Ausbildung einer geblähten Graphitschicht.

### Beispiel 29

Stammlösung BBN (siehe Beispiel 14); zusätzlich 50 Teile bei 260°C vorexpandierter, mit Ammoniak neutralisierter blähfähiger Graphit.
Raumgewicht trocken: 34 g/l; KBS: -2 Sekunden bei Ausbildung einer geblähten Graphitschicht.

### Beispiel 30

Stammlösung BBNZ (siehe Beispiel 15); zusätzlich 20 Teile Titandioxid-Weißpigment.
Raumgewicht trocken: 33 g/l; KBS: 21 Sekunden.

### Beispiel 31

Stammlösung BB (siehe Beispiel 7); zusätzlich 50 Teile Dolomitpulver.
Raumgewicht trocken: 29 g/l; KBS: 17 Sekunden.

### Beispiel 32

Stammlösung BB (siehe Beispiel 7); zusätzlich 50 Teile handelsübliche Aluminiumsilikathohlperlen, Schüttgewicht 200 g/l.
Raumgewicht trocken: 33 g/l; KBS: 20 Sekunden; formbeständig.

### Beispiel 33

Stammlösung BHBZ (siehe Beispiel 10); zusätzlich 50 Teile handelsübliches Harnstoff-Formaldehydharz-Pulver (Urecoll® der BASF).
Raumgewicht trocken: 34 g/l; KBS: 7 Sekunden.

### Beispiel 34

Stammlösung BBNZ (siehe Beispiel 15); zusätzlich 20 Teile Leitfähigkeitsruß.
Raumgewicht trocken: 30 g/l; KBS: 1 Sekunde.

### Beispiel 35

Stammlösung BB (siehe Beispiel 7); zusätzlich 100 Teile Schwerspatpulver.
Raumgewicht trocken: 45 g/l; KBS: 11 Sekunden.

### Beispiel 36

Stammlösung BBN (siehe Beispiel 14); zusätzlich 90 Teile Maisstärke.
Raumgewicht trocken: 38 g/l; KBS: 2 Sekunden.

### Beispiel 37

Stammlösung BBNZ (siehe Beispiel 15); zusätzlich 60 Teile 50%ige Dispersion eines Ethylen-Vinylacetat-Copolymers (Vinnapas® EV 25, Wacker-Chemie).
Raumgewicht trocken: 35 g/l; KBS: 9 Sekunden.

### Beispiele 38 bis 47:

### Anwendungen und Verarbeitungen

### Beispiel 38 (Brandschutz)

Trockene Späne der Abmessungen 0,4 x 2 x 30 cm aus Pappe, Holz-Preßspanplatten, aufgerauhtem Polypropylen, aufgerauhtem Polycarbonat, Polystyrolschaum, Polyurethan-Integral-Hartschaum (Baydur®) und Fichtenholz wurden jeweils hälftig in die Lösungen BA, BB, BBN, BAM und BBNZ (siehe Beispiele 6, 7, 13, 14 und 15), die jeweils mit 0,01 % eines handelsüblichen Fluortensids versetzt worden waren, eingetaucht. Dann ließ man die Lösung von den Spänen, in senkrechter Lage aufgehängt, ablaufen und beim Raumklima von 60 % relativer Luftfeuchte und 21°C trocknen.

Nach 30 Tagen wurden die hälftig mit einer klebfrei-harten lasierenden Beschichtung versehenen Späne einer Bunsenbrennerflamme genau an der Grenzlinie zwischen beschichteten und unbeschichtetem Span, 3 Minuten lang ausgesetzt. In allen Fällen brannte oder tropfte der unbeschichtete Teil ab, während die beschichteten Teile sofort von einer keramik-artigen festen und voluminösen Schicht von intumeszierendem Beschichtungsmaterial umgeben wurden, die das Brennen nach Abstellen der Beflammung unterband. Nach Abkühlung wurde der mit Intumeszenzschaum bedeckte Teil des Spanes aufgeschnitten. In allen Fällen waren die Späne unter dem gebildeten Intumeszenzschaum weitgehend unverändert erhalten geblieben.

Diese Versuche zeigen die Möglichkeit zur Herstellung von Brandschutzanstrichen mit dem erfindungsgemäßen Material.

Dieses Beispiel wurde mit gleichartigem Ergebnis mit Lösung BB (siehe Beispiel 7) durchgeführt, die durch Zugabe von 10 % Pyro-Kieselsäurefüllstoff zu einer thixotropen Paste angeteigt worden war. Die so erhaltene, streichfähige Paste ließ sich gut aufstreichen, tropfte von den Spänen nicht ab und gestattete nahezu beliebige Schichtdicken auf dem Substrat in einem Arbeitsgang für Brandschutzzwecke zu deponieren.

### Beispiel 39 (Thermische Verarbeitung)

Die Lösung BA (siehe Beispiel 6) wurde bei 180°C auf einem Walzentrockner getrocknet. Die erhaltenen Schuppen wurden auf einer beheizten Plattenpresse bei 200°C und 150 bar zu einer 5 mm dicken Platte verpreßt. Man erhielt nach dem Abkühlen eine nahezu klare Scheibe mit glasartigem Charakter.

Diese Platte intumeszierte bei Beflammung sehr stark. Formkörper, die in analoger Weise hergestellt wurden, können als Bauelemente für den vorbeugenden Brandschutz und zur Herstellung von Hitze- und Rauchgasbarrieren in Lüftungsschächten, bei Kabelabschottungen und bei Brandschutztüren verwendet werden.

Der gleiche Prozeß wurde mit einem Gemisch aus 100 Teilen des vorstehend verwendeten Materials nach Zusatz von 15 Teilen Polyaramid-Stapelfasern wiederholt. Man erhielt eine analoge faserverstärkte Platte.

### Beispiel 40 (Schneckenaufarbeitung)

Über eine handelsübliche Ausdampfschnecke mit eingebauten Knetelementen wurde die Lösung BA (siehe Beispiel 6) geschickt. Der Solltemperaturverlauf ging von 120°C am Anfang der Schnecke kontinuierlich steigend bis zu 175°C vor der Austrittsdüse.

Aus dieser trat das ausgedampfte Material als glasartiger, zäh-schmelzflüssiger Strang aus. Das frisch austretende Material konnte im Zustand der Thermoplastizität noch durch Pressen zu Formteilen, ähnlich wie bei der Glastechnologie, verarbeitet werden. Derartige Formteile müssen, ähnlich Glas, langsam abgekühlt werden, um sie spannungsarm zu erhalten.

Bei Beflammung intumeszierten sie intensiv und sind entsprechend gut zur Herstellung von Formteilen und Vorrichtungen für den Brandschutz geeignet.

### Beispiel 41 (Intumeszenzschaumkörper; Hohlperlen)

Lösung BB (siehe Beispiel 7) wurde bei 120°C getrocknet und pulverisiert. Die Kornfraktion mit dem mittleren Korndurchmesser von 0,5 mm wurde in die Flamme eines Erdgasgebläses, das in einem Schacht aus Drahtgewebe brannte, eingebracht.

In der Flamme schäumen die Pulverteilchen auf und wurden aus dem Drahtgewebeschacht als Hohlkugeln ausgetragen. Diese Hohlkugeln mit mittleren Durchmesser von 1,5 mm wurden 10 Minuten lang durch einen mit 250°C beheizten Ofen hindurchgeführt, dann abgekühlt und abgefüllt. Die glasartigen, bräunlichen Hohlperlen waren wasserunlöslich und eigneten sich als thermische Isolierschüttung für Kühlhäuser und zur Hohlraumausfüllung in Mauerwerken.

Die erhaltenen Hohlperlen wurden auf einem Sieb aus Polyethylen in Form einer 5 cm dicken Schicht angeordnet und dann mit 30%iger Lösung BA (siehe Beispiel 6) begossen. Dann wurde überschüssige Lösung abgesaugt und der gebildete Hohlkugelkuchen bei 90°C im Luftstrom getrocknet. Dann wurde die gebildete erkaltete Platte in einen Heißluftofen überführt und bei 200°C nachgetrocknet. Man erhielt eine nicht brennende, wasserbeständige und isotrope Schaumstoffplatte, die für thermische Isolierungen geeignet ist.

### Beispiel 42 (Isolierflocken)

Man ging wie bei Beispiel 41 vor, verwendete jedoch eine Kornfraktion mit Korndurchmessern von 1 bis 3 mm. So wurden in dem Gebläse-Flammenschacht Flocken aus sehr feinem, hochexpandierten Intumeszenzschaum gebildet, die Schüttgewichte von wenigen Gramm pro Liter besaßen, bis über 1000°C hitzebeständig waren und einen nicht spröden, sondern eher flexiblen, duktilen Eindruck machten.

Solche Flocken sind als wasserbeständiges Isoliermaterial, z.B. als Schüttung verwendbar.

### Beispiel 43 (Heißverformen, Kaschieren)

Eine 6 cm dicke Platte aus Schaumstoff hergestellt gemäß Beispiel 21 mit einem Trockenraumgewicht von 28 g/l wurde auf einer beidseitig beheizten, mit Teflon® beschichteten, gewellten Plattenpresse bei 240°C auf 3 cm Dicke zusammengepreßt. Dann wurde die Presse geöffnet, die wellig zusammengepreßte Platten entnommen und im Luftstrom gekühlt. Die Schaumstoffplatte hatte nun verdichtete Randzonen und Sandwich-Charakter.

Sie konnte leicht gesägt, geschraubt und genagelt werden. Sie ist als brandwidriges Bau- und Isolationselement verwendbar.

Solange die frisch hergestellte Sandwichplatte noch heiß genug war, d.h. unmittelbar nach Entnahme aus der Heißpressung, konnte sie dreidimensional durch Ziehen über eine Krümmung verformt werden. Sie ist also z.B. zur Herstellung von Rohrhalbschalen geeignet.

### Beispiel 44

Eine Schaumstoffplatte hergestellt analog Beispiel 43 aus dem Schaumstoff des Beispiels 27 mit der Dicke von 5 cm wurde in der Plattenpresse bei 170°C und 200 bar zu einer massiven glasfaserhaltigen Platte von 5 mm Dicke verpreßt. Eine derartige faserverstärkte Platte kann als brandwidriges, intumeszierendes Bauelement verwendet werden.

Die gleiche Verpressung wurde auch noch bei 250°C vorgenommen. Die so erhaltene Platte intumeszierte schwächer, war dafür jedoch wasserbeständig.

### Beispiel 45

In eine 8 cm dicke Platte, hergestellt analog Beispiel 43 aus dem Schaumstoff des Beispiels 22 wurde ein auf 250°C vorgeheizter, teflonisierter Stahl-Prägestempel mit einem erhaben aufgebrachten Schriftzug von Hand eingedrückt. Nach Entfernen des Stempels verblieb die Schrift als eingedrückte Prägung in der Schaumstoff-Oberfläche.

### Beispiel 46 (Sandwiches)

Gemäß Beispiel 11, Tabelle 1, Versuchsreihe 1 wurde auf Basis der Lösung BB (siehe Beispiel 7) ein Schaumstoff hergestellt. Dieser hatte ein Raumgewicht von 30 g/l.

Aus diesem Schaumstoff wurden mit einer Bandsäge Platten von 5 cm Dicke geschnitten.
a) Eine solche Platte wurde beidseitig mit 0,05 mm starker, entfetteter Aluminiumfolie bedeckt und dann in einer beidseitig auf 250°C vorgeheizten Plattenpresse um 5 mm zusammengedrückt und der Presse entnommen.
   Man erhielt einen mit Aluminiumfolien kaschierten Schaumstoffsandwich mit leicht verdichteter Oberfläche, der als Bau- und Isolierelement verwendet werden kann.
b) Beispiel 46a) wurde bei 180°C Pressentemperatur wiederholt und der Schaumstoff um 10 mm zusammengedrückt.
   Man erhielt einen mit Aluminiumfolie kaschierten Sandwich mit stärker verdichteter Oberfläche.

Beispiel 46b) wurde wiederholt mit verschiedenen Deckschicht-Materialien:
Packpapier,
Plakatkarton (Pappe),
Karton/Alufolie/Polyethylen-Verbundfolie,
Holzfurnier (z.B. aus Buche, Eiche oder Lumba),
Polyethylenterephthalat-Folie,
Polycarbonat-Folie,
Polyethylen-Folie,
Glasseidengewebe,
Glasseiden-Vliesstoff
Polyacrylnitril-Gewebe (Dralon® T, Bayer AG),
Baumwoll-Nessel-Gewebe,
Baumwoll/Polyester-Mischgewebe,
Spaltleder,
0,5 mm Stahlblech, entfettet,
0,5 mm Aluminiumblech, entfettet und
Aluminium/Polyethylen-Verbundfolie.

In allen Fällen erhielt man einen stabilen, beschichteten Schaumstoff-Sandwich, der für Zwecke des Bau- und Möbelsektors als Bau- und Konstruktionselement verwendet werden kann.

### Beispiel 47

Die in Beispiel 46 mit Plakatkarton erhaltene Sandwich-Schaumstoffplatten wurden oberseitig mit einem handelsüblichen Pulverlack gleichmäßig bestreut (Auflage 300 g/m²) und unter einem Infrarotstrahler hindurch gefahren.

Hierbei entstand auf der Schaumstoffplatte eine homogene, abriebbeständige, mechanisch schützende Deckschicht. Derartige Platten können als Isolierelemente und zu Schallschutzzwecken Verwendung finden.

### Beispiel 48

Es wurde analog den Beispielen 16 bis 37 verfahren. Stammlösung BB (siehe Beispiel 7); zusätzlich 8 Teile Diphenyl-kresylphosphat gelöst im Polyisocyanat. Raumgewicht trocken: 33 g/l; KBS: -3 Sekunden.

Der Schaumstoff wurde bei 70 % relativer Luftfeuchte und 23°C konditioniert und hatte dann eine Druckfestigkeit von 0,2 MPa. Er wurde bei Raumtemperatur dreimal durch ein Walzenpaar geführt und dabei ohne Scherung vollständig komprimiert. Der Schaumstoff wies dann den Charakter eines elastischen Weichschaumes auf.

### Beispiel 49

2766 Teile technische o-Phosphorsäure (85 %ig), 242 Teile Wasser und 624 Teile Hydrargillith (Al-Hydroxyd) wurden bei 110°C unter Rühren zu einer klaren ca. 70 %igen Lösung gelöst. Diese Lösung wurde mit 660 Teilen Wasser auf ca. 60 % verdünnt.

Zu 2292 Teilen dieser 60 %igen Lösung wurden bei Raumtemperatur 840 Teile Monoethanolamin (3,18 mol pro Mol Aluminium) in 15 Minuten hinzugerührt. Man erhielt eine klare Lösung, die 35 Minuten unter Rückfluß gekocht und dann auf unter 25°C abgekühlt wurde.

Die erhaltene klare Lösung wies einen pH-Wert von 5,6 (Lyphan®papier), einen theoretischen Feststoffgehalt von von 72 %, eine Viskosität bei 20°C von 2900 cp (Haake Viskotester, Spindel 2) und eine Dichte von 1,48 g/cm³ auf.

300 Teile dieser Lösung wurden zunächst mit 25 Teilen propoxyliertem Triethanolamin (OH-Zahl 500), 20 Teilen Triethanolamin, 10 Teilen Diphenylkresylphosphat, 10 Teile Ölsäure, 2 Teilen eines Polyethersiloxan-Stabilisators, 7,5 Teilen Monoethanolamin und 30 Teilen Cyclopentan gut verrührt und dann mit 110 Teilen technischem MDI (Desmodur® 44V20 der Bayer AG) gut verrührt.

Dann wurde das Reaktionsgemisch in eine papierene Kastenform gegossen, wo das Gemisch aufschäumte. Nach 3 Minuten war ein trocken abgebundener feinporiger Schaumstoff entstanden. Dieser wurde bei 90°C nachgetrocknet und hatte ein Raumgewicht von 33 g/l.

Da der Schaumstoff weitgehend offenporig war und eine geringe Brandlast hatte, eignet er sich gut für das Schalldämmungs-, Stoßdämpfungs- und Verpackungszwecke.

### Beispiel 50

1170 Teile handelsübliches Ammoniumpolyphosphat wurden mit 500 Teilen Wasser und 300 Teilen der Lösung AA (siehe Beispiel 1) verrührt, 40 Minuten unter Rückfluß gekocht und anschließend auf 20°C abgekühlt.

Man erhielt eine stabile Dispersion mit einem pH-Wert von 6 und einer, wie oben bei 20°C gemessenen Viskosität von 3000 cp.

300 Teile dieser Dispersion wurden analog Beispiel 49 in einen feinporigen Polyurethanschaum überführt. Dabei wurden lediglich an Stelle von 7,5 Teilen Monoethanolamin jetzt 10 Teile 45 %ige Phosphorsäure in die Rezeptur eingebracht.

Der erhaltene Schaumstoff hatte ein Raumgewicht von 25 g/l. Im Brandschachttest gemäß DIN 4102 erreichte er die Klassifizierung B1. Er ist deshalb für Schallschutzzwecke, zur Stoßabsorption und für Isolierungen, gegebenenfalls auch in evakuiertem und luft- und feuchtigkeitsdicht oberflächenkaschiertem Zustand, geeignet.

## Patentansprüche

1. Filmbildende, wäßrige Metallphosphat-Amin-Komplex-Lösungen, die Produkte der folgenden summarischen Zusammensetzung enthalten
A_{1 bis 5}B_{0 bis 12}P_{3 bis 9}N_{4 bis 12}M_{0 bis 9}H_{0 bis 6} (I),
in der
A eine oder mehrere Metailverbindungen aus der Gruppe der Hydroxide, Oxide und Carbonate von Aluminium, Magnesium, Kalzium und Zink bedeutet,
B eine oder mehrere Verbindungen aus der Gruppe der Säuren, Oxide und Oxidhydrate des Bors bedeutet,
P eine oder mehrere Verbindungen aus der Gruppe der Oxide und Säuren des Phosphors, der Hydratisierungsprodukte von Oxiden des Phosphors, der Phosphinsäuren und der Phosphonsäuren bedeutet,
N eine oder mehrere Verbindungen aus der Gruppe der Amine, Ammoniak und deren Alkoxylierungsprodukte bedeutet,
M Alkalimetallhydroxid, -carbonat oder -bicarbonat bedeutet und
H eine oder mehrere Verbindungen aus der Gruppe Harnstoff, der Kohlehydrate und zuckerartige Verbindungen und der C- und N-Methylolverbindungen bedeutet,
dadurch gekennzeichnet, daß sie erhältlich sind, indem man in wäßrigem Medium vorliegende saure Umsetzungsprodukte von Metallverbindungen (A) und phosphorhaltigen Verbindungen (P), gegebenenfalls mit Borverbindungen (B) und stickstoffhaltigen Verbindungen (N) intensiv vermischt, dann mindestens 30 Minuten unter Rühren bei Temperaturen von mindestens 100°C hält, danach unter gutem Rühren auf Temperaturen unter 100°C abkühlt, dann unter weiterem Rühren gegebenenfalls eine oder mehrere Alkalimetallverbindungen (M) und/oder gegebenenfalls eine oder mehrere der Verbindungen (H) zusetzt und schließlich auf Temperaturen unter 45°C abkühlt.

2. Filmbildende Lösungen nach Anspruch 1, dadurch gekennzeichnet, daß sie Produkte der summarischen Zusammensetzung (II) enthalten,
A_{1 bis 4}B_{3 bis 9}P₆N_{6 bis 9}M_{0 bis 3}H_{0 bis 3} (II),
in der die verwendeten Symbole die bei Formel (I) angegebene Bedeutung haben.

3. Filmbildende Lösungen nach Ansprüchen 1 und 2, dadurch gekennzeichnet, daß in den Formeln (I) und (II)
A = Aluminiumhydroxid und/oder Magnesiumhydroxid,
B = o-Borsäure,
P = o-Phosphorsäure, Meta-, Pyro- oder Polyphosphorsäure, (Poly)Carboxybutyl-, Methyl- oder (Alkyl)Phenylphosphonsäure oder Methylphosphonsäure,
N = primäre, sekundäre und tertiäre, geradkettige, verzweigte oder cyclische Alkylamine, primäre, sekundäre oder tertiäre araliphatische heterocyclische oder aromatische Amine, Ammoniak oder Ethoxylierungs- und/oder Propoxylierungsprodukte davon,
M = Natriumhydroxid und
H = Harnstoff, Pentaerythrit, Trimethylolpropan, Zuckeralkohole, Resole, Harnstoff- oder Melamin-Methylolverbindungen oder Kohlehydrate
bedeuten.

4. Filmbildende Lösungen nach Ansprüchen 1 bis 3, dadurch gekennzeichnet, daß sie erhältlich sind, indem man bei ihrer Herstellung eine Temperatur von 100 bis 170°C für 45 bis 180 Minuten einhält.

5. Filmbildende Lösungen nach Ansprüchen 1 bis 4, dadurch gekennzeichnet, daß bei ihrer Herstellung Ammoniumphosphate zugesetzt wurden.

6. Verfahren zur Herstellung von filmbildenden Lösungen der Ansprüche 1 bis 5, dadurch gekennzeichnet, daß man das Komponentenpaar A und P einerseits und die Komponente N, gegebenenfalls in Kombination mit Komponente B, andererseits in Gegenwart von Wasser getrennt bei 50 bis 100°C in klare Lösungen überführt, diese Lösungen unter Rühren intensiv vermischt, dann das Gemisch mindestens 30 Minuten unter Rühren bei Temperaturen von mindestens 100°C hält, dabei gegebenenfalls im Rahmen der summarischen Zusammensetzung (I) weitere Anteile der Komponenten A und/oder B zufügt, dann unter gutem Rühren auf Temperaturen unter 100°C abkühlt, dann gegebenenfalls eine oder mehrere Verbindungen M und/oder gegebenenfalls eine oder mehrere Verbindungen H und/oder gegebenenfalls Ammoniumphosphat zusetzt und schließlich auf Temperaturen unter 45°C abkühlt.

7. Polyurethan-Polyharnstoff-Schaumstoffe, dadurch gekennzeichnet, daß sie Lösungen der Ansprüche 1 bis 5 in einer solchen Menge eingebaut enthalten, daß über 20 Gew.-% der in diesen Lösungen enthaltenen Produkte der summarischen Zusammensetzung (I) in den Schaumstoffen eingebaut sind.

8. Verfahren zur Herstellung von Schaumstoffen des Anspruchs 7, dadurch gekennzeichnet, daß man an sich bekannte Polyurethan-Polyharnstoff-Rezepturen zur Herstellung von Schaumstoffen auf der Basis von Polyolen und Polyisocyanaten abwandelt, indem man Lösungen der Ansprüche 1 bis 5 als integrierte Reaktionskomponente einsetzt.

9. Verfahren nach Anspruch 8, dadurch gekennzeichnet, daß man als Wirkstoffkomponenten in den Schaumstoffrezepturen Carbonsäuren und/oder Phosphorsäureester einsetzt.

10. Verwendung von Lösungen der Ansprüche 1 bis 5 und von daraus durch Trocknung erhältlichen Feststoffen zur Verbesserung der Brandwidrigkeit von Formteilen, Beschichtungen, Isolierungen und Imprägnierungen.
